Europäisches Patentamt

European Patent Office

Office européen des brevets

(19)

(11) Veröffentlichungsnummer : **0 420 881 B1**

(12) **EUROPÄISCHE PATENTSCHRIFT**

(45) Veröffentlichungstag der Patentschrift :
16.09.92 Patentblatt 92/38

(51) Int. Cl.$^5$ : **B62D 7/14**, B62D 5/30

(21) Anmeldenummer : **89906745.8**

(22) Anmeldetag : **10.06.89**

(86) Internationale Anmeldenummer :
**PCT/EP89/00653**

(87) Internationale Veröffentlichungsnummer :
**WO 89/12568 28.12.89 Gazette 89/30**

(54) **ALLRAD-LENKANLAGE FÜR KRAFTFAHRZEUGE.**

(30) Priorität : **15.06.88 DE 3820354**

(43) Veröffentlichungstag der Anmeldung :
**10.04.91 Patentblatt 91/15**

(45) Bekanntmachung des Hinweises auf die
Patenterteilung :
**16.09.92 Patentblatt 92/38**

(84) Benannte Vertragsstaaten :
**DE FR GB IT SE**

(56) Entgegenhaltungen :
**DE-A- 3 525 255**
**US-A- 3 063 424**
**Patent Abstracts of Japan, Band 10, Nr. 218**
**(M-503)(2274), 30. Juli 1976**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **TISCHER, Werner**
**Im Brühl 33**
**W-7072 Heubach-Lautern (DE)**

EP 0 420 881 B1

Jouve, 18, rue Saint-Denis, 75001 PARIS

## Beschreibung

Die Erfindung betrifft eine Lenkanlage für Kraftfahrzeuge nach dem Oberbegriff des Hauptanspruchs.

In solchen Lenkanlagen lassen sich die Hinterräder des Fahrzeugs bei langsamer Fahrt entgegengesetzt und bei schneller Fahrt gleichsinnig zu den Vorderrädern einschlagen. Hierzu sieht man ein Lenkventil vor, welches sowohl die Vorderachslenkungals auch die Hinterachslenkung ansteuert. Aus der DE-OS 35 25 255 ist ein zusätzlicher Stellmotor für die Hinterräder bekannt, der über ein von der Fahrgeschwindigkeit abhängiges Richtungsventil ansteuerbar ist. Der Stellmotor weist in der Verlängerung des Gehäuseteils für den Arbeitskolben einen Gehäuseabschnitt mit zwei durch eine Feder auf Abstand gehaltenen Steuerkolben als Hubbegrenzungskolben auf. Die Steuerkolben sind auf einer gleichzeitig den Arbeitskolben tragenden Kolbenstange verschiebbar und liegen durch die Kraft der Feder an Schultern des Gehäuseabschnitts an. Die Kolbenstange weist im Bereich der Steuerkolben eine Durchmesserverringerung auf, deren axiale Erstreckung um einen kleinen Betrag größer ist als der größte Abstand der beiden Steuerkolben. In der Mittenstellung des Arbeitskolbens ergeben sich so zwischen Absätzen der Kolbenstange gleich große Zwischenräume, in die elastische Körper eingesetzt sind. Der zwischen den beiden Steuerkolben befindliche Federraum hat die Funktion einer Druckkammer und ist an eine Druckleitung der Pumpe angeschlossen. Ein Leitungszweig der Druckleitung führt zu einem Tank. In dem Leitungszweig sitzt ein durch einen Fahrgeschwindigkeitssensor beeinflußbares Drosselventil.

Die bekannte Lenkanlage läßt sich wie folgt betreiben:

Führt der Fahrer bei höherer Geschwindigkeit eine Lenkbewegung aus, dann steuert der Fahrgeschwindigkeitssensor das Drosselventil zu. In der Druckkammer baut sich daraufhin ein Druck aus, der die Steuerkolben an den Schultern des Gehäuseabschnitts in Anlage hält. Gleichzeitig verstellt sich das Richtungsventil des Stellmotors unter dem Einfluß eines weiteren Fahrgeschwindigkeitssensors so, daß die Hinterräder mit den Vorderrädern eine gleichsinnige Lenkbewegung ausführen. Da die beiden Steuerkolben axial festgelegt sind, läßt sich die Kolbenstange nur im Bereich der kleinen Zwischenräume verschieben, wobei die elastischen Körper zusammengedrückt werden. Dies ergibt einen Lenkwinkelausschlag der Hinterräder von etwa 8°. Durch diesen Lenkvorgang läßt sich die Fahrstabilität erhöhen. Führt der Fahrer dagegen bei niedriger Fahrgeschwindigkeit eine Lenkbewegung aus, dann steuert der Fahrgeschwindigkeitssensor das Drosselventil auf. In der Druckkammer bildet sich daher kein Druck aus. Lediglich die Feder drückt die Steuerkolben gegen die Gehäuseschultern. Gleichzeitig verstellt der andere Fahrgeschwindigkeitssensor das Richtungsventil in eine Position, in welcher die Hinterräder gegensinnig zu den Vorderrädern einschlagen. Die Kolbenstange drückt, je nach Lenkrichtung, einen der Steuerkolben gegen die Kraft der Feder von ihrer Schulter ab, wodurch sich ein erheblich größerer Verschiebeweg für die Kolbenstange und dadurch auch ein größerer Lenkeinschlag für die Hinterräder ergibt. Mit der beschriebenen Anordnung soll sich ein stabiles Lenkverhalten bei hoher Fahrgeschwindigkeit und ein kleiner Wendekreis bei niedriger Fahrgeschwindigkeit erreichen lassen. Da die Kolbenstange bei Ausfall der Hydraulik in der Geradeaus-Fahrtstellung frei beweglich ist, neigen die Hinterräder, insbesonders bei schneller Fahrt auf unebener Fahrbahn zu Eigenlenkverhalten. Dies bedeutet eine ungünstige Veränderung des Fahrverhaltens des Fahrzeugs, da unkontrolliertes Einlenken und Achsflattern die Richtungs- und Fahrstabilität beeinträchtigen. Außerdem sind in der bekannten Lenkanlage bei langsamer Fahrgeschwindigkeit hohe Drücke erforderlich, da nicht nur die Reibkraft der zu lenkenden Räder, sondern gleichzeitig auch noch die Kraft der auf die Steuerkolben wirkenden Feder zu überwinden ist.

Der Erfindung liegt die Aufgabe zugrunde, die nachgeführte Lenkachse bei einer Störung im Hydrauliksystem oder im elektronischen Steuerteil in die Geradeaus-Fahrtstellung zurückzustellen und dort zu arretieren. Dabei soll die Rückstellbewegung ohne das Auftreten überraschender Lenkeffekte ablaufen. Die Arretierung soll auf die Räder einwirkende Kräfte zuverlässig aufnehmen können, so daß keine Achsverstellungen und Flatterbewegungen der Räder möglich sind.

Nach der Erfindung läßt sich diese Aufgabe durch die Merkmale nach den Ansprüchen 1 bis 7 lösen.

Die Steuerkolben in dem Gehäuseabschnitt des Stellmotors bilden auf ihrer der Druckkammer abgewandten Stirnseite mit beiderseits angeordneten und auf der Kolbenstange festen Arbeitskolben Steuerräume. Befindet sich die Lenkanlage in Betriebsbereitschaft, dann herrscht in diesen Steuerräumen der Systemdruck, der die Steuerkolben gegen die Kraft des in der Druckkammer angeordneten Federelements an einer Abstandshülse in Anlage hält. Dabei ist die Druckkammer über ein elektrisch schaltbares 2/2-Wegeventil entlastet. Zuvor hat ein Druckwächter den Druckaufbau in der Druckkammer kontrolliert und ein Freigabesignal an ein Schaltgerät übermittelt, welches mit dem 2/2-Wegeventil verknüpft ist.

In der Entlastungsstellung haben die Steuerkolben zu ihren Schultern im Gehäuse und zu an den Arbeitskolben vorhandenen Anschlagbunden Abstand. Steuert man bei einer Lenkbewegung über eine Ventileinrichtung einen der Druckräume der Arbeitskolben an, so können die Hinterräder, z. B. zum Befahren einer Kurve, um einen Einschlagwinkel bewegt werden. Sollte durch eine Störung im Hydraulikkreis ein Druckabfall in den Steuerräumen eintreten, so gehen die Steuerkolben durch die Wirkung des Federelements an den Schultern und an den Arbeitskolben in Anlage. Auf diese Weise läßt sich die Kolbenstange in der Geradeausfahrt-Stellung der Hinterräder zurückführen und arretieren. Das beim Zurückbewegen der Steuerkolben aus den Steuerräumen verdrängte Öl fließt dabei über eine Blende ab, die gewissermaßen als Bremse wirkt. Durch die allmähliche Rückstellung läßt sich ein plötzlich den Fahrer überraschender Lenkeffekt vermeiden. Die erfindungsgemäße Arretierstellung stellt eine erhebliche Verbesserung der Betriebssicherheit einer Allradlenkung bei Hydraulikstörungen dar. Die Rückführ- und Arretiervorrichtung benötigt beim Lenken keinen zusätzlichen Energieaufwand.

In einer weiteren Ausführungsform ist eine sogenannte Schnellabschaltung vorgesehen, die beim Ausfall der Steuerelektrik gleichfalls auf die Arretiereinrichtung einwirkt. Hierzu sieht man eine an die Druckkammer angeschlossene und mit der Druckquelle verbundene Abschaltleitung mit einem Sperrventil vor. Außerdem sind in an die Steuerräume angeschlossene und gleichfalls mit der Druckquelle verbundene Leitungsabschnitte Umschaltventile eingebaut. Sollte eine Störung in der Steuerelektronik auftreten, so schalten das Sperrventil in die Durchlaufstellung und die beiden Umschaltventile in die Entlastungsstellung. Da gleichzeitig auch das 2/2-Wegeventil der Steuereinrichtung umschaltet, baut sich der hohe Systemdruck ohne Verzögerung in der Druckkammer auf, so daß sich die Steuerkolben sofort in die Arretierstellung bewegen. Auf diese Weise bleibt die Lenksicherheit auch bei Störungen im elektronischen Steuerteil erhalten. Die Auswirkungen auf die Fahrstabilität sind dabei ohne Belang, da die Schnellabschaltung nur bei stehendem Fahrzeug oder bei geringer Fahrgeschwindigkeit wirksam ist.

Weiter Einzelheiten der Erfindung sind anhand von drei in der Zeichnung dargestellten Ausführungsbeispielen erläutert. Es zeigen

Fig. 1 ein Schema einer Allradlenkung,

Fig. 2 eine schematische Darstellung der zur Fig. 1 gehörenden Hinterachslenkung,

Fig. 3 eine Ausführungsform der Hinterachslenkung und

Fig. 4 eine weitere Ausführungsform mit einer Sicherheits-Schnellabschaltung.

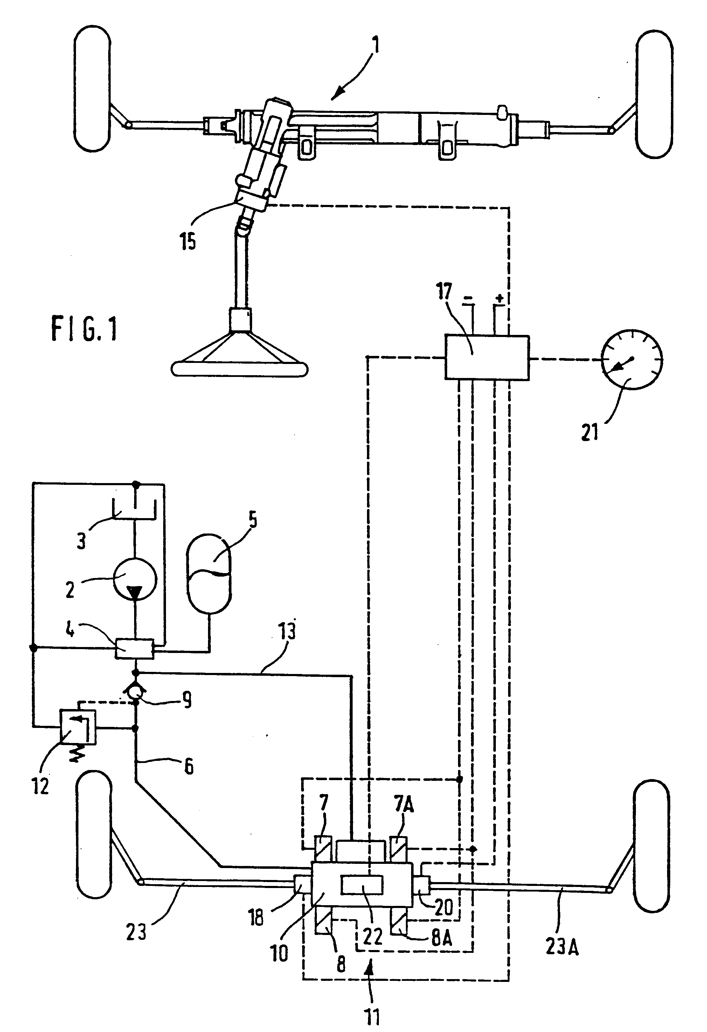

Die Übersichtszeichnung nach Fig. 1 zeigt eine Vorderradlenkung 1, die sich mechanisch oder servohydraulisch betätigen läßt. Der Einfachheit halber sind die für eine Hilfskraftlenkung notwendigen Hydraulikleitungen weggelassen. Ein nicht gezeichneter Antriebsmotor treibt eine Hochdruckpumpe 2 an, die im Bedarfsfalle auch die Vorderradlenkung 1 mit Drucköl versorgt. Die Pumpe 2 saugt das Öl aus einem Tank 3 an und füllt über ein Speicherladeventil 4 einen Druckspeicher 5. Der Druckspeicher 5 sorgt dafür, daß unter allen Betriebsbedingungen im Verbraucher ausreichende Druckenergie zur Verfügung steht. Eine ein Rückschlagventil 9 enthaltende Zulaufleitung 6 steht über eine Ventileinrichtung in Form von Magnetventilen 7 und 7A mit einem Stellmotor 10 einer Hinterradlenkung 11 in Verbindung. Weitere Magnetventile 8 und 8A können die jeweils drucklose Seite des Stellmotors 10 mit dem Tank 3 verbinden. Ein Druckbegrenzungsventil 12 stellt den Höchstdruck im Hydraulikkreis ein. Ein Leitungszweig 13 der Zulaufleitung 6 führt zu einer Rückführ- und Arretiervorrichtung im Stellmotor 10. An einer Lenkspindel der Vorderradlenkung befindet sich ein Lenkwinkelsensor 15, der über eine Steuerleitung mit einem elektronischen Schaltgerät 17 verbunden ist. Im Bereich des Stellmotors 10 der Hinterradlenkung 11 sind entsprechende Wegsensoren 18, 20 angebracht, zu welchen zum Schaltgerät 17 führende Steuerleitungen gehören. Außerdem gibt noch ein Tachometer 21 ein Geschwindigkeitssignal in das Schaltgerät 17 ein. Das Schaltgerät 17 verarbeitet diese Informationen und gibt in bekannter Weise Ausgangssignale an die Magnetventile 7, 7A und 8, 8A ab. Die Hinterräder lassen sich entsprechend dem Lenkeinschlag der Vorderradlenkung je nach Fahrgeschwindigkeit gleichsinnig oder gegensinnig zu den Vorderrädern einschlagen.

Eine zur Erfindung gehörende Steuereinrichtung 22, die nachfolgend näher erläutert wird, steht über eine Steuerleitung gleichfalls mit dem Schaltgerät 17 in Verbindung.

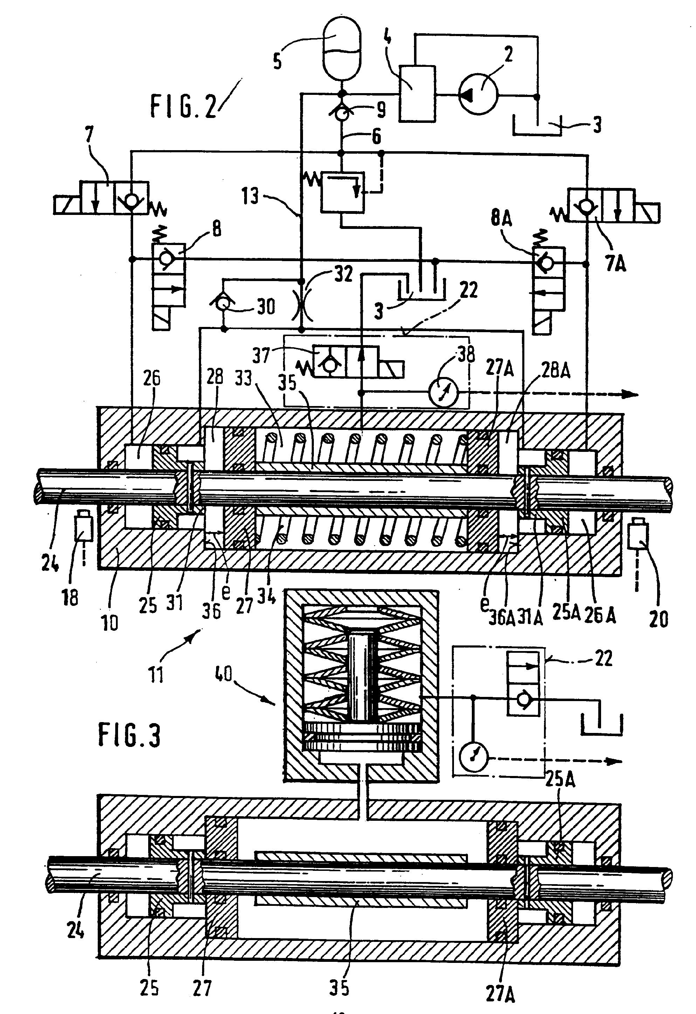

In Fig. 2 haben die im Zusammenhang mit Fig. 1 bereits beschriebenen Bauteile gleiche Bezugsziffern. Der Stellmotor 10 weist eine mit Spurstangen 23 und 23A (Fig. 1) der Hinterräder verbundene Kolbenstange 24 auf. Auf der Kolbenstange 24 sind Arbeitskolben 25 und 25A befestigt, die zusammen mit dem Gehäuse des Stellmotors 10 Druckräume 26 und 26A bilden. Diese Druckräume 26 und 26A lassen sich über die Magnetventile 7 bzw. 7A mit der Zulaufleitung 6 verbinden. Zu den Druckräume 26 und 26A gehören außerdem die Magnetventile 8 bzw. 8A, die je nach Einschlagrichtung der Hinterradlenkung 11 Entlastungsfunktion haben. Das Schaltgerät 17 (Fig. 1) schaltet die Magnetventile 7 und 8A bzw. 7A und 8 immer paarweise.

Ein Gehäuseabschnitt mit größerem Innendurchmesser als die Zylinderabschnitte für die Arbeitskolben 25 und 25A enthält zwei auf der Kolbenstange 24 verschiebliche Steuerkolben 27 und 27A. Nach der Erfindung schließen die Arbeitskolben 25 und 25A und die Steuerkolben 27 bzw. 27A zwischen sich Steuerräume 28 und 28A ab. Diese Steuerräume sind an den Leitungszweig 13 angeschlossen, welcher zu der aus der Pumpe 2, dem Speicherladeventil 4 und dem Speicher 5 bestehenden Druckquelle führt. Der Leitungszweig 13 enthält ein in Richtung zu den Steuerräume 28 und 28A öffnendes Rückschlagventil 30. In einem als Rücklaufleitung dienenden und das Rückschlagventil 30 umgehenden Leitungsabschnitt sitzt eine Blende 32. In Betriebsbereitschaft der Lenkanlage stützen sich die Steuerkolben 27 und 27A gegen die Kraft eines Federelements 34 an einer Hülse 35 ab. Eine Druckkammer 33 umschließt das Federelement 34 und die Hülse 35. Kommt es zu einer Störung im Hydraulikkreis, dann legen sich die Steuerkolben 27 und 27A an Schultern 36 und 36A des Gehäuses und gleichzeitig an Anschlagbunden 31 bzw. 31A der Arbeitskolben 25 und 25A an.

Die die Druckkammer 33 beeinflussende Steuereinrichtung 22 besteht aus einem elektromagnetisch betätigbaren 2/2-Wegeventil 37 mit einer Durchlaufstellung und einer Blockierstellung in Richtung zum Tank. Außerdem ist ein den Druck in der Druckkammer 33 überwachender Druckwächter 38 vorgesehen, der über eine elektrische Steuerleitung mit dem Schaltgerät 17 in Verbindung steht.

Die Hinterradlenkung arbeitet wie folgt:

Die Fig. 2 zeigt die Ausgangsstellung bei laufendem Fahrzeugmotor, d. h., die Pumpe 2 ist in Betrieb. Über den Leitungszweig 13 hat sich in den Steuerräumen 28 und 28A ein Druck aufgebaut, der die Steuerkolben 27 und 27A gegen die Hülse 35 drückt. Das 2/2-Wegeventil befindet sich in seiner Durchlaufstellung. Damit ist die Kolbenstange 24 frei, und die Anlage befindet sich in Lenkbereitschaft. Führt der Fahrer am Lenkhandrad der Vorderradlenkung 1 eine Lenkbewegung, z. B. nach rechts, aus, so wird ein entsprechendes Eingangssignal in das Schaltgerät 17 eingegeben. In Abhängigkeit von diesem Eingangssignal und vom Signal des Tachometers 21 steuert das Schaltgerät 17 beispielsweise bei schneller Fahrt die beiden Magnetventile 7A und 8 an, so daß der Druckraum 26A an die Zulaufleitung 6 und der Druckraum 26 mit dem Tank 3 Verbindung erhält. Der Hub der Kolbenstange 24 nach links ist dabei auf den größten Verschiebeweg 2x e begrenzt, wobei die Rückführ- und Arretiervorrichtung 27, 27A, 34, 35 im Block an der Schulter 36 in Anlage gelangt. Über die Wegsensoren kontrolliert das Schaltgerät 17 die Übereinstimmung des Lenkwinkels mit der Vorderradlenkung, so daß dieses gegebenenfalls eine Korrektur des Hinterradeinschlages vornehmen kann.

Angenommen, der Druck im Hydraulikkreis bricht während des vorgeschriebenen Lenkvorgangs durch einen Ausfall der Pumpe 2 zusammen, dann werden auch die Steuerräume 28 und 28A drucklos. Das Federelement 34 kann sich entspannen, so daß der Steuerkolben 27A (Kolbenstange 24 nach links verschoben) am Anschlagbund 31A des Arbeitskolbens 25A zur Anlage gelangt und diesen in die Mittenposition bewegt, in welcher der Steuerkolben 27A an der Schulter 36A anliegt. Gleichzeitig legt sich auch der Anschlagbund 31 an dem an der Schulter 36 abgestützten Steuerkolben 27 an. Dabei kann das Rückschlagventil im 2/2-Wegeventil 37 in die Druckkammer 33 nachsaugen. Diese Rückstellung der Kolbenstange 24 in die Geradeausfahrt-Stellung geschieht mit Verzögerung, da das aus den Steuerräumen 28 und 28A verdrängte Öl nur allmählich über die Blende 32 zum Tank 3 zurückfließen kann. Auf diese Weise ist gesichert, daß der Fahrer nicht durch eine plötzliche Lenkbewegung überrascht wird. Die Arretierung in der Geradeausfahrt-Stellung läßt sich halten durch die Kraft des Federelements 34, das geschlossene 2/2-Wegeventil 37 sowie die Rückschlagventile in den Magnetventilen 7, 7A und 8, 8A.

In der Ausführungsform nach Fig. 3 verwendet man anstelle des zwischen den Steuerkolben 27 und 27A liegenden Federelements 34, das vorzugsweise als Tellerfederpaket ausgeführt ist, einen außenliegenden Federspeicher 40. Man verbindet hier den Innenraum des Federspeichers 40 mit der in Fig. 2 beschriebenen Steuereinrichtung 22. Im Gegensatz zu Fig. 2 befindet sich die Rückführ- und Arretiervorrichtung 27, 27A, 35 in der Blockierstellung. Die nicht dargestellten Leitungsverbindungen und Ventile entsprechen der Darstellung nach Fig. 2.

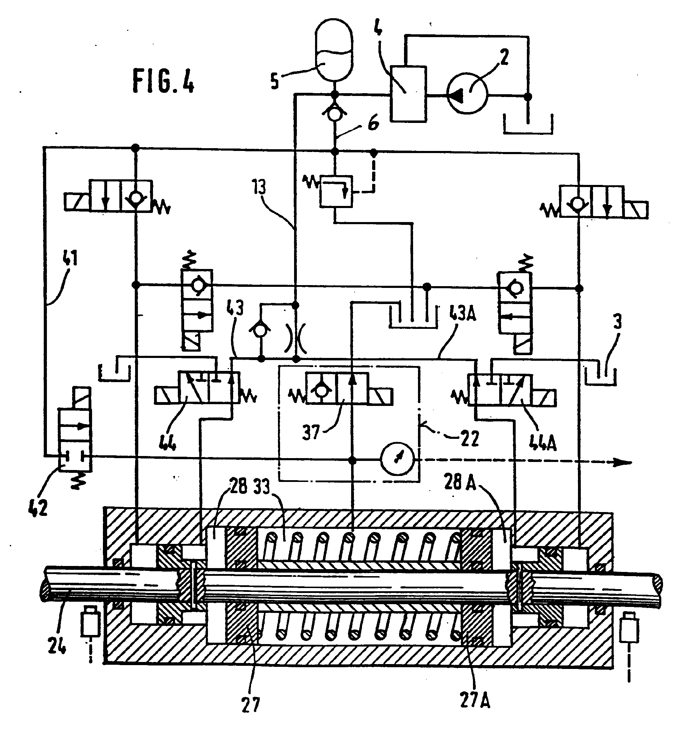

Die Hinterradlenkeinrichtung nach Fig. 2 läßt sich durch den Einbau einer sogenannten Schnellabschaltung noch weiter verbessern, die bei einer Störung in der Steuerelektronik auf die Arretiervorrichtung 27, 27A, 34, 35 einwirkt. Die Ausführungsform nach Fig. 4 zeigt die für die Schnellabschaltung zusätzlich benötigten Bauteile:

Die Zulaufleitung 6 kann über eine Abschaltleitung 41 mit dem Druckraum 33 verbunden werden. In der Abschaltleitung 41 sitzt ein Sperrventil 42 mit einer Blockier- und einer Durchlaufstellung. Weiter enthalten an den Leitungszweig 13 angeschlossene und zu den Steuerräumen 28 und 28A führende Leitungsabschnitte 43 und 43A Umschaltventile 44 und 44A. Diese Ventile 42, 44 und 44A lassen sich elektromagnetisch betätigen. Das Sperrventil 42 und die Umschaltventile 44 und 44A befinden sich in der Zeichnung, ebenso wie die gesamte Anlage, in der Betriebsbereitschaft der Hinterachslenkung. Bei einer Störung in der Steuerelektronik schaltet ein Sicherheitskreis das Sperrventil 42 in die Durchlaufstellung und die Umschaltventile 44 und 44A in die Entlastungsstellung. Gleichzeitig schaltet das 2/2-Wegeventil 37 in seine Blockierstellung. Da sich jetzt über die Abschaltleitung 41 der Systemdruck in der Druckkammer 33 ausbilden kann und sich das in den Steuerräumen 28 und 28A befindliche Ölvolumen ohne Verzögerung ausschieben läßt, bewegen sich die Steuerkolben 27 und 27A sofort in die Arretierstellung.

Falls kein Sicherheitskreis in der Steuerelektronik vorgesehen ist, ordnet man die Ventile 42, 44 und 44A in Zwangsschaltung an Dies bedeutet, daß die Ventile in der Lenkbetriebbstellung erregt sind und bei einer Störung durch Federkraft in die Schnellabschaltstellung bewegt werden.

Bezugszeichen

| | | | |
|---|---|---|---|
| 1 | Vorderradlenkung | 28 | Steuerraum |
| 2 | Hochdruckpumpe | 28A | Steuerraum |
| 3 | Tank | 30 | Rückschlagventil |
| 4 | Speicherladeventil | 31 | Anschlagbund |
| 5 | Druckspeicher | 31A | Anschlagbund |
| 6 | Zulaufleitung | 32 | Blende |
| 7 | Magnetventil | 33 | Druckkammer |
| 7A | Magnetventil | 34 | Federelement |
| 8 | Magnetventil | 35 | Hülse |
| 8A | Magnetventil | 36 | Schulter |
| 9 | Rückschlagventil | 36A | Schulter |
| 10 | Stellmotor | 37 | 2/2-Wegeventil |
| 11 | Hinterradlenkung | 38 | Druckwächter |
| 12 | Druckbegrenzungsventil | 39 | - |
| 13 | Leitungszweig | 40 | Federspeicher |
| 14 | - | 41 | Abschaltleitung |
| 15 | Lenkventilsensor | 42 | Sperrventil |
| 16 | - | 43 | Leitungsabschnitt |
| 17 | elektron. Schaltgerät | 43A | Leitungsabschnitt |
| 18 | Wegsensor | 44 | Umschaltventil |
| 19 | - | 44A | Umschaltventil |
| 20 | Wegsensor | | |
| 21 | Tachometer | e | Verschiebeweg |
| 22 | Steuereinrichtung | | |
| 23 | Spurstange | | |
| 23A | Spurstange | | |
| 24 | Kolbenstange | | |
| 25 | Arbeitskolben | | |
| 25A | Arbeitskolben | | |
| 26 | Druckraum | | |
| 26A | Druckraum | | |
| 27 | Steuerkolben | | |
| 27A | Steuerkolben | | |

**Patentansprüche**

1.  Allrad-Lenkanlage für Kraftfahrzeuge mit folgenden Merkmalen:

5

a) es ist ein, eine Lenkeinrichtung betätigende Lenkhandrad zum Verstellen von Vorderrädern vorgesehen;

b) eine weitere Lenkeinrichtung verstellt die Hinterräder;

c) die Lenkeinrichtung der Hinterräder enthält einen durch eine Pumper (2) beaufschlagbaren und über eine Ventileinrichtung ansteuerbaren Stellzylinder (10), der sich in Abhängigkeit vom Lenkwinkel der Vorderräder ansteuern läßt;

d) der Stellzylinder (10) enthält zur Erzielung einer Lenkbewegung eine auf einer Kolbenstange (24) fest und in Druckräumen verschiebbare Arbeitskolbenanordnung;

e) in einem Gehäuseabschnitt des Stellmotors (10) sind auf der Kolbenstange zwei gegen ein Federelement (34) bewegliche Steuerkolben (27 und 27A) gelagert, die eine Druckkammer (33) mit veränderbarem Volumen zwischen sich einschließen;

f) in dem Gehäuseabschnitt vorhandene Schultern (36 und 36A) dienen zur Abstützung der Steuerkolben;

g) die zwischen den Steuerkolben liegende veränderliche Druckkammer (33) ist an eine Steuereinrichtung angeschlossen;

**gekennzeichnet** durch folgende Merkmale:

h) die beiden Steuerkolben (27 und 27A) bilden mit beiderseits angeordneten Arbeitskolben (25 und 25A) Steuerräume (28 und 28A);

i) bei Anlage der Steuerkolben (27 und 27A) an den Schultern (36 und 36A) stützen sich die Arbeitskolben (25 und 25A) an den Steuerkolben (27 und 27A) ab;

k) die an die Druckkammer (33) angeschlossene Steuereinrichtung (22) besteht aus einem 2/2-Wegeventil (37) mit einer Durchlaufstellung zur Entlastung der Druckkammer (33) und mit einer Blockierstellung zum Halten des Druckes sowie aus einem mit einem Schaltgerät (17) verbundenen Druckwächter (38) zur Kontrolle des Druckaufbaus in der Druckkammer (33).

2. Allrad-Lenkanlage nach Anspruch 1, dadurch **gekennzeichnet**, daß die Steuerräume (28 und 28A) ständig mit der Druckquelle (2, 4, 5) Verbindung haben (Fig. 2).

3. Allrad-Lenkanlage nach Anspruch 1, **gekennzeichnet** durch folgende Merkmale:

a) in einen als Rücklaufleitung dienenden Leitungszweig (13) zwischen den Steuerräumen (28 und 28A) und einer Zulaufleitung (6) ist eine Blende (32) eingebaut und

b) parallel zur Blende (32) im Leitungszweig (13) liegt ein Rückschlagventil (30).

4. Allrad-Lenkanlage nach Anspruch 1, dadurch **gekennzeichnet**, daß die beiden Steuerkolben (27 und 27A) in der Lenkstellung durch eine auf der Kolbenstange (24) lose geführte Abstandshülse (35) abstützbar sind.

5. Allrad-Lenkanlage nach Anspruch 1, dadurch **gekennzeichnet**, daß das auf die Steuerkolben (27 und 27A) einwirkende Federelement (34) als Tellerfeder ausgeführt ist.

6. Allrad-Lenkanlage nach Anspruch 1, dadurch **gekennzeichnet**, daß anstelle des Federelements (34) ein an die Druckkammer angeschlossener Federspeicher (40) vorgesehen ist (Fig. 3).

7. Allrad-Lenkanlage nach Anspruch 1, **gekennzeichnet** durch folgende Merkmale:

a) in eine an die Zulaufleitung (6) angeschlossene und zur Druckkammer (33) führende Abschaltleitung (41) ist ein Sperrventil (42) mit einer Blockier- und einer Durchlaufstellung eingesetzt;

b) zu den Steuerräumen (28 und 28A) führende Leitungsabschnitte (43 und 43A) enthalten Umschaltventile (44 bzw. 44A) mit einer Durchlaufstellung und einer Entlastungsstellung und

c) bei einer Störung in der Steuerelektronik schalten das Sperrventil (42) in die Durchlaufstellung und die beiden Umschaltventile (44 und 44A) in die Entlastungsstellung (Fig. 4).

## Claims

1. All-wheel steering system for motor vehicles having the following features:

a) a steering handwheel which actuates a steering device is provided for the adjustment of front wheels;

b) a further steering device adjusts the rear wheels;

c) the steering device of the rear wheels comprises an adjusting cylinder (10) which may be acted upon by a pump (2) and may be activated by means of a valve device in dependence upon the steer angle

EP 0 420 881 B1

of the front wheels;

d) in order to achieve a steering movement the adjusting cylinder (10) comprises a working piston arrangement which is fixed on a piston rod (24) and is displaceable in pressure chambers;

e) supported in a housing portion of the servomotor (10) on the piston rod are two control pistons (27 and 27A) which are movable against a spring element (34) and between them enclose a pressure chamber (33) of variable volume;

f) shoulders (36 and 36A) provided in the housing portion are used to support the control pistons;

g) the variable pressure chamber (33) lying between the control pistons is connected to a control device; characterized by the following features:

h) the two control pistons (27 and 27A) form, with working pistons (25 and 25A) disposed on either side, control chambers (28 and 28A);

i) upon application of the control pistons (27 and 27A) on the shoulders (36 and 36A), the working pistons (25 and 25A) are supported on the control pistons (27 and 27A);

k) the control device (22) connected to the pressure chamber (33) comprises a 2/2-way valve (37) with a through-flow setting for relieving the pressure chamber (33) and with a blocking setting for pressure keeping, as well as a pressure-operated switch (38) connected to a switching device (17) for monitoring the pressure build-up in the pressure chamber (33).

2. All-wheel steering system according to claim 1, characterized in that the control chambers (28 and 28A) are constantly connected to the pressure source (2, 4, 5) (Fig.2).

3. All-wheel steering system according to claim 1, characterized by the following features:
a) in a line branch (13) serving as a return line between the control chambers (28 and 28A) and a supply line (6) there is installed a diaphragm (32) and
b) lying parallel to the diaphragm (32) in the line branch (13) is a check valve (30).

4. All-wheel steering system according to claim 1, characterized in that the two control pistons (27 and 27A) in the steering setting may be supported by a distance sleeve (35) loosely guided on the piston rod (24).

5. All-wheel steering system according to claim 1, characterized in that the spring element (34) acting upon the control pistons (27 and 27A) takes the form of a cup spring.

6. All-wheel steering system according to claim 1, characterized in that a spring energy store (40) connected to the pressure chamber is provided instead of the spring element (34) (Fig.3).

7. All-wheel steering system according to claim 1, characterized by the following features:
a) a lock valve (42) with a blocking and a through-flow setting is inserted into a cutoff line (41) which is connected to the supply line (6) and leads to the pressure chamber (33);
b) line portions (43 and 43A) leading to the control chambers (28 and 28A) contain switchover valves (44 and 44A) with a through-flow setting and a relief setting and
c) in the event of a fault in the control electronics, the lock valve (42) switches into the through-flow setting and the two switchover valves (44 and 44A) switch into the relief setting (Fig. 4).

**Revendications**

1. Direction à toutes roues directrices pour véhicules à moteur, dans laquelle :
a) il est prévu un volant manuel actionnant un dispositif de direction pour orienter des roues avant;
b) un autre dispositif de direction oriente les roues arrière;
c) le dispositif de direction des roues arrière comporte un vérin de commande (10) pouvant être alimenté par une pompe (2) et commandé par un dispositif de soupapes, en fonction de l'angle de braquage des roues avant;
d) pour produire un mouvement de braquage, le vérin de commande (10) contient un agencement de pistons de travail fixés sur une tige de piston (24) et coulissant dans des chambres de pression;
e) une section du corps du servomoteur (10) contient deux pistons de commande (27 et 27A) qui sont mobiles sur la tige de piston à l'encontre d'un élément à ressort (34) et qui délimitent entre eux une chambre à volume variable (33);
f) des épaulements (36 et 36A) ménagés dans ladite section du corps servent de butées pour les pistons de commande;

7

g) la chambre à volume variable (33) située entre les pistons de commande est raccordée à un dispositif de commande;

**caractérisée** en ce que:

h) les deux pistons de commande (27 et 27A) forment des chambres de commande (28 et 28A) avec les pistons de travail (25 et 25A) disposés de part et d'autre;

i) quand les pistons de commande (27 et 27A) s'appuient contre les épaulements (36 et 36A), les pistons de travail (25 et 25A) s'appuient contre les pistons de commande (27 et 27A);

k) le dispositif de commande (22) raccordé à la chambre à volume variable (33) comporte un distributeur 2/2 (37) ayant une position de passage pour décharger ladite chambre (33) et une position de blocage pour maintenir la pression, ainsi qu'un contrôleur de pression (38) raccordé à un appareil de commande (17) pour contrôler la montée de la pression dans ladite chambre (33).

2. Direction selon la revendication 1, **caractérisée** en ce que les chambres de commande (28 et 28A) ont une liaison permanente (fig. 2) avec la source de pression (2, 4, 5).

3. Direction selon la revendication 1, **caractérisée** en ce que :
a) un étranglement (32) est disposé dans un embranchement (13) servant de conduit de retour entre les chambres de commande (28 et 28A) et un conduit d'alimentation (6), et
b) ledit embranchement (13) comporte un clapet anti-retour (30) en parallèle à cet étranglement (32).

4. Direction selon la revendication 1, **caractérisée** en ce que les deux pistons de commande (27 et 27A) peuvent s'appuyer l'un contre l'autre, en position de braquage, au moyen d'une douille d'écartement (35) coulissant librement sur la tige de piston (24).

5. Direction selon la revendication 1, **caractérisée** en ce que l'élément à ressort (34) agissant sur des pistons de commande (27 et 27A) est réalisé sous la forme d'un ressort à disques.

6. Direction selon la revendication 1, **caractérisée** en ce qu'il est prévu, au lieu de l'élément à ressort (34), un accumulateur à ressort (40) raccordé à la chambre à volume variable (fig. 3).

7. Direction selon la revendication 1, **caractérisée** par les caractéristiques suivantes :
a) une vanne de blocage (42), ayant une position de blocage et une position de passage, est montée sur un conduit de déclenchement (41) raccordé au conduit d'alimentation (6) et menant à la chambre à volume variable (33);
b) des sections de conduits (43 et 43A) menant aux chambres de commande (28 et 28A) comportent des soupapes de commutation (44 et 44A) ayant une position de passage et une position de décharge; et
c) en cas de perturbation de l'électronique de commande, la vanne de blocage (42) est mise en position de passage et les deux soupapes de commutation (44 et 44A) sont mises en position de décharge (fig. 4).

FIG.1

FIG.2

FIG.3

10

FIG.4